# EUROPÄISCHE PATENTSCHRIFT

(11) **EP 1 399 322 B1**
(45) Veröffentlichungstag und Bekanntmachung des Hinweises auf die Patenterteilung: **19.10.2005**
(21) Anmeldenummer: 02743239.2
(22) Anmeldetag: 25.06.2002
(51) Int. Cl.: B60C 23/04

(54) **RAD FÜR FAHRZEUGE MIT LUFTREIFEN UND ANORDNUNG AUS EINEM VENTIL, EINER VORRICHTUNG ZUM MESSEN DES REIFENDRUCKES UND EINER SIE IM LUFTREIFEN HALTENDEN FEDER**
VEHICLE WHEEL COMPRISING A TYRE AND AN ASSEMBLY CONSISTING OF A VALVE, A DEVICE FOR MEASURING THE TYRE PRESSURE AND A SPRING FOR HOLDING SAID DEVICE IN THE TYRE
PNEUMATIQUE DE ROUE DE VEHICULE ET ENSEMBLE COMPRENANT UNE VALVE, UN DISPOSITIF POUR MESURER LA PRESSION DU PNEUMATIQUE ET UN RESSORT LE MAINTENANT DANS LE PNEUMATIQUE

(30) Priorität: 26.06.2001 DE 10131411
(43) Veröffentlichungstag der Anmeldung: 24.03.2004
(73) Patentinhaber: Beru Aktiengesellschaft, 71363 Ludwigsburg (DE)
(72) Erfinder: NORMANN, Norbert, 75223 Niefern-Öschelbronn (DE); KÜHNLE, Andreas, 75433 Maulbronn (DE)
(74) Vertreter: Twelmeier, Ulrich
(86) Internationale Anmeldenummer: PCT/EP2002/006985
(87) Internationale Veröffentlichungsnummer: WO 2003/002360

(56) Entgegenhaltungen:
- EP-A- 0 751 017
- DE-A- 19 626 145

## Beschreibung

Die Erfindung geht aus von einer Anordnung mit den im Oberbegriff des Anspruchs 1 angegebenen Merkmalen und von einem Rad mit den im Oberbegriff des Anspruchs 20 angegebenen Merkmalen.

Aus der EP 0 751 017 B1 ist ein Rad für Fahrzeuge mit Luftreifen bekannt, in welchem das Gehäuse einer Vorrichtung zum Messen des Reifendruckes fest mit dem Fuß eines Ventils verschraubt ist. Zu diesem Zweck ist die Veritilbohrung, durch die hindurch Luft in den Reifen gepumpt werden kann, als Gewindebohrung ausgebildet und das Gehäuse der Vorrichtung zum Messen des Reifendrukkes hat ein Langloch, durch das hindurch eine hohle Schraube in das Gewinde der Ventilbohrung gedreht werden kann. Die Schraube wird fest angezogen, so daß danach das Gehäuse am Ventilfuß befestigt ist. Der Ventilfuß besteht zu diesem Zweck aus Metall und hat eine kugelabschnittsförmige äußere Gestalt, mit welcher er sich in eine Ausnehmung des Gehäuses der Vorrichtung zum Messen des Reifendruckes einfügt, welche zu diesem Zweck eine komplementäre Kugelkalotte aufweist. Damit sich das Gehäuse am Felgenbett abstützen kann, hat das Gehäuse zwei der Abstützung auf dem Felgenbett dienende Füße. Damit diese bei unterschiedlich gestalteten Felgen das Felgenbett tatsächlich erreichen, kann das Gehäuse infolge des vorgesehenen Langlochs in unterschiedlichen Orientierungen bezüglich der Längsachse der Ventilbohrung an dem Ventilfuß festgelegt werden. Infolge dieser Ausführungsform kann ein- und dasselbe Gehäuse der Vorrichtung zum Messen des Reifendrucks in Rädern mit unterschiedlich gestalteten Felgen stabil montiert werden. Nachteilig ist jedoch, daß man für die Befestigung des Gehäuses der Vorrichtung zum Messen des Reifendruckes ein speziell angepaßtes Ventil benötigt, dessen Ventilbohrung im Ventilfuß als Gewindebohrung ausgebildet ist und eine durchbohrte Spezialschraube aufnimmt, mit welcher das Gehäuse am Ventilfuß festgeschraubt wird. Diese durchbohrte Spezialschraube ist teuer. Außerdem muß das Gehäuse der Vorrichtung zum Messen des Reifendruckes einen tiefen Einschnitt haben, um die Schraube durch das Langloch stecken und mit einem Schraubendreher in den Ventilfuß drehen zu können. Der tiefe Einschnitt im Gehäuse geht auf Kosten des Innenraumes des Gehäuses und unterteilt dieses in zwei Abteile, was die Freiheit der Anordnung der elektrischen und elektronischen Komponenten im Gehäuse beschränkt.

Eine Anordnung mit den Merkmalen des Oberbegriffs des Anspruchs 1 und ein Rad mit den Merkmalen des Oberbegriffs des Anspruchs 20 sind aus der DE 196 26 145 A1 bekannt. Bei diesem bekannten Rad wird nicht das Gehäuse der Vorrichtung zum Messen des Reifendruckes mit dem Ventilfuß verschraubt, sondern eine Feder, deren freies Ende das Gehäuse in der Weise beaufschlagt, daß das Gehäuse zwischen dem freien Ende der Feder und der Felge des Fahrzeugrades eingeklemmt wird, und zwar so, daß sich das Gehäuse einerseits auf dem Grund des Felgenbettes und andererseits an zwei Abstützstellen an der Flanke des Felgenbettes abstützt. Die Feder drückt das Gehäuse also sowohl gegen den Grund des Felgenbettes als auch gegen die Flanke des Felgenbettes, so daß das Gehäuse an vier Seiten umfaßt ist, nämlich an zwei Seiten von der Feder, an einer Seite vom Felgenbett und an einer Seite von der Flanke des Felgenbettes. Nachteilig ist, daß für das Befestigen der Feder am Ventilfuß wie bei der aus der EP 0 751 017 B1 bekannten Anordnung eine teure durchbohrte Spezialschraube benötigt wird. Nachteilig ist ferner, daß für unterschiedlich geformte Felgen unterschiedlich geformte Federn benötigt werden, um das Gehäuse gegen die Felge zu drücken und dadurch zu fixieren.

Der vorliegenden Erfindung liegt demgegenüber die Aufgabe zugrunde, einen Weg aufzuzeigen, wie ein Gehäuse mit einer Vorrichtung zur Messung des Reifendruckes preiswerter und universeller an unterschiedlichen Felgen für luftbereifte Räder befestigt werden kann.

Diese Aufgabe wird gelöst durch eine Anordnung mit den im Anspruch 1 angegebenen Merkmalen sowie durch ein Rad mit den im Anspruch 20 angegebenen Merkmalen. Vorteilhafte Weiterbildungen der Erfindung sind Gegenstand der Unteransprüche.

Bei der erfindungsgemäßen Anordnung sind das Gehäuse, in welchem sich die Vorrichtung zum Messen des Reifendruckes befindet, die Feder, welche das Gehäuse federnd beaufschlagt, und die am Rad zu befestigende Halterung für die Feder derart ausgebildet und aneinander angepaßt, daß sich das Gehäuse an der Halterung abstützt und zu diesem Zweck zwischen der Feder und der Halterung eingeklemmt ist. Anders als bei der aus der DE 196 26 145 A1 bekannten Anordnung nimmt die Halterung nicht nur die Feder auf, sondern erfüllt in Kombination damit eine weitere Funktion als Abstützung für das Gehäuse, welches die Vorrichtung zum Messen des Reifendruckes enthält. Dabei wirken das Gehäuse, die Halterung und die Feder in besonderer Weise zusammen, indem das Gehäuse zwischen der Feder und der Halterung eingeklemmt ist. Das unterscheidet die Anordnung wesentlich vom Gegenstand der DE 196 26 145 A1: Während dort die Feder das Gehäuse ausschließlich gegen die Felge, nämlich gegen das Felgenbett und gegen die das Felgenbett begrenzende Flanke der Felge drückt, zieht erfindungsgemäß die Feder das Gehäuse gegen die Halterung der Feder. Damit ist für alle möglichen Ausführungsformen von Felgen eine universelle Montage des Gehäuses möglich, denn die durch die Halterung und die Feder vorgegebenen Angriffspunkte, zwischen denen das Gehäuse eingespannt wird, sind in ihrer gegenseitigen Zuordnung unabhängig von der individuellen Felge vorgebbar. Außerdem kann aus der Halterung, dem Gehäuse mit der Vorrichtung zum Messen des Reifendruckes und aus der Feder eine vormontierte Einheit gebildet werden, welche als Einheit gehandhabt und an der Felge befestigt werden kann.

Die Halterung kann der Fuß eines Ventils sein, über welches der Luftreifen befüllt wird. Diese Möglichkeit wird für Tiefbettfelgen bevorzugt, welche bei Personenkraftwagen üblich sind. Bei Tiefbettfelgen steckt das Ventil in einem Loch in einer das Tiefbett begrenzenden Flanke der Felge und verläuft mit seiner Längsachse unter einem Winkel zur Vertikalen. Bei einer solchen Anordnung eignet sich der im Inneren des Luftreifens liegende Ventilfuß besonders gut zur Abstützung des Gehäuses der Vorrichtung zum Messen des Reifendruckes. Wird, wie es erfindungsgemäß vorgesehen ist, die Feder ebenfalls am Ventilfuß befestigt, so daß das Gehäuse zwischen dem Ventilfuß und der Feder eingeklemmt werden kann, wird eine teure Spezialschraube, welche bei der aus der EP 0 751 017 B1 bekannten Montageweise benötigt wird, entbehrlich. Mit dem Wegfall der durchbohrten Schraube entfällt auch der Zwang, im Gehäuse einen Einschnitt vorsehen zu müssen, um eine solche Schraube montieren zu können. Das Gehäuse kann vielmehr ohne sich aus der Montagetechnik ergebende gravierende Einschränkungen gestaltet werden.

Bei Lastkraftwagen, bei welchen das Ventil üblicherweise in radialer Richtung in einem Loch des Flachbettes einer Flachbettfelge steckt, eignet sich der im Luftreifen liegende Ventilfuß weniger zur Halterung der Feder und zur Abstützung des Gehäuses für die Vorrichtung zum Messen des Reifendruckes. Bei einer Flachbettfelge wird deshalb vorzugsweise eine gesonderte Halterung verwendet und an der Felge mit einem Spannband befestigt, welches das Felgenbett umschließt. Spannbänder sind aus der Installationstechnik bekannt. Sie machen Veränderungen an der Felge und Schweiß- oder Lötarbeiten an der Felge zur Befestigung der Halterung unnötig. Sie können aus Kunststoff oder Metall bestehen. Vorzugsweise wird ein metallisches Spannband verwendet. Die Halterung für die Feder kann in diesem Fall ein Blechteil sein, welches mit Hilfe von Stanz-, Biege- und Prägevorgängen preiswert herstellbar ist. Eine solche Halterung hat vorzugsweise einen auf dem Felgenbett liegenden ersten Teil und einen vom Felgenbett abstehenden zweiten Teil, gegen welchen sich das Gehäuse abstützt, wenn es eingespannt ist. Die Ausrichtung und Kontur des vom Felgenbett abstehenden zweiten Teils wählt man vorzugsweise so oder so ähnlich, wie es bei einer Tiefbettfelge für den Ventilfuß der Fall ist. Damit kann sichergestellt werden, daß Vorrichtungen zum Messen des Reifendruckes in Flachbettfelgen mit demselben Gehäuse montiert werden können wie in Tiefbettfelgen.

Um die Halterung in einer Flachbettfelge besonders sicher fixieren zu können, ist sie in ihrem auf dem Felgenbett liegenden ersten Teil vorzugsweise nach Art einer zweifachen Schlaufe ausgebildet, durch welche das Spannband hindurchgeführt ist.

Es ist erfindungswesentlich, daß das Gehäuse sich an der Halterung abstützt und zwischen der Feder und der Halterung eingeklemmt ist. Das schließt jedoch nicht aus, daß sich das Gehäuse auch zusätzlich an der Felge abstützt. Das wird sogar bevorzugt, um dem Gehäuse eine stabilere Lage zu verleihen. Vorzugsweise ist die Feder deshalb so ausgebildet und angeordnet, daß sie das Gehäuse zusätzlich gegen das Felgenbett drückt oder zieht. Drückt die Feder das Gehäuse gegen das Felgenbett, dann ist sie oberhalb des Gehäuses angeordnet und so vorgeformt und an der Halterung angebracht, daß das Gehäuse nur unter Wegbiegen der Feder vom Felgenbett, wodurch die Feder vorgespannt wird, unter der Feder positioniert werden kann. Wird das Gehäuse gegen das Felgenbett gezogen, dann ist die Feder hingegen unter dem Gehäuse angeordnet und liegt dem Felgenbett mit Vorspannung an. In beiden Fällen bedarf es jedoch keiner Abstützung des Gehäuses an einer das Felgenbett begrenzenden Flanke der Felge, weil sich das Gehäuse bereits an der Halterung abstützt.

Durch das Einspannen des Gehäuses zwischen der Feder und ihrer Halterung wird das Gehäuse jedenfalls kraftschlüssig festgehalten. Vorzugsweise wird es nicht nur kraftschlüssig, sondern gleichzeitig auch formschlüssig zwischen der Halterung und der Feder festgehalten, um absolut sicher zu sein, daß sich das Gehäuse nicht aus seiner Halterung herausbewegen kann. Aus diesem Grund hat das Gehäuse vorzugsweise eine Ausnehmung zum Aufnehmen eines Teils der Halterung. Besonders geeignet ist eine Halterung, die ein ballig ausgebildetes Ende hat, insbesondere in Gestalt einer Kugelkalotte. Das Gehäuse soll eine zum balligen Ende der Halterung passende konkave Ausnehmung haben, in welche das ballige Ende der Feder eingreift. Das ermöglicht nicht nur einen form- und kraftschlüssigen Eingriff der Halterung in das Gehäuse, sondern auch eine Selbstzentrierung und eine selbständige Ausrichtung des Gehäuses in der für seine Festlegung besten Position.

Die Feder ist zweckmäßigerweise eine Blattfeder. Sie läßt sich in ihrer Gestalt besonders einfach an die Kontur des Gehäuses anpassen, kann dadurch das Gehäuse bequem umgreifen und ist in der Lage, eine ausreichende Federkraft zu erbringen.

Die Feder kann auf unterschiedliche Weise an der Halterung gehalten werden. Sie kann mit der Halterung verschraubt oder stoffschlüssig verbunden werden, sie kann mit der Halterung aber auch formschlüssig verbunden werden, insbesondere dadurch, daß in der Halterung eine Ringnut vorgesehen ist, in welche eine an der Feder ausgebildete Gabel eingeführt wird. Diese kann sogar lose in die Halterung eingreifen, wenn die Gabel so orientiert ist, daß sie durch die Federspannung, welche nach der Montage der Feder und des Gehäuses in der Feder herrscht, in die Ringnut der Halterung hineingedrückt wird. Es ist aber auch möglich, in das Ende der Halterung, an welchem sich das Gehäuse abstützt, eine Schraube zu drehen und ein als Gabel ausgebildetes oder mit einem Loch ausgebildetes Ende der Feder zwischen dem Kopf der Schraube und dem Ende der Halterung festzuklemmen. Die dafür benötigte Schraube muß nicht - wie im Stand der Technik - eine durchbohrte Spezialschraube sein, sondern kann eine billige Normschraube sein.

Ein formschlüssiger Eingriff ist nicht nur zwischen dem Gehäuse und der Halterung vorteilhaft, sondern auch zwischen dem Gehäuse und der Feder. Zu diesem Zweck weist die Feder vorzugsweise einen Bügel auf, welchen das Gehäuse in einer mittig angeordneten Aufnahmeeinrichtung aufnimmt, insbesondere in einer flachen Nut, die sich besonders zur Aufnahme einer Blattfeder eignet. Auf diese einfache Weise kann ein Verrutschen des Gehäuses verhindert werden, wobei die Tiefe der Nut so gering sein kann, daß sie sich auf das zur Verfügung stehende Volumen des Gehäuseinnenraumes praktisch nicht auswirkt. Um Kippmomente gering zu halten, sollte das Gehäuse in Bezug auf seine mittige Aufnahmeeinrichtung, welche vorzugsweise eine flache Nut ist, spiegelsymmetrisch sein.

Einen noch besseren Halt erreicht man mit einer Feder, welche zwei zueinander parallele Bügel aufweist, welche ein gemeinsames Verbindungsteil haben, mit dem die Feder an der Halterung angebracht werden kann. Dieses Verbindungsteil kann z.B. eine Öse oder eine Gabel sein. Zum Aufnehmen der beiden zueinander parallelen Bügel hat das Gehäuse in diesem Fall zwei parallele Aufnahmeeinrichtungen, insbesondere zwei flache Nuten, welche am besten symmetrisch in Bezug auf die Mittelebene des Gehäuses angeordnet sind, welche eine Längsachse der Halterung, z.B. die Längsachse eines Ventils, enthält. Kippmomente, welche durch die Drehung des Rades während der Fahrt auftreten können, lassen sich auf diese Weise optimal beherrschen.

Zum Abstützen des Gehäuses auf dem Felgenbett hat das Gehäuse auf seiner Unterseite zweckmäßigerweise zwei von der Unterseite vorspringende Füße, welche auf unterschiedlichen Seiten der Mittelebene des Gehäuses liegen. Auf diese Weise erhält man eine stabile Dreipunktlagerung des Gehäuses: Zwei Lagerpunkte befinden sich auf dem Felgenbett und der dritte Lagerpunkt an der Halterung, mit welcher das Gehäuse mittels der Feder verspannt ist.

Dient der Fuß eines Ventils als Halterung für die Feder und als Abstützung für das Gehäuse, dann hat das Gehäuse zweckmäßigerweise einen Luftdurchgangskanal, in welchen das Ventil mündet. Dieser Luftdurchgangskanal benötigt jedoch keinen großen Querschnitt, so daß der Innenraum des Gehäuses dadurch nicht wesentlich verkleinert oder störend verengt wird.

Vorteilhafte Ausführungsbeispiele der Erfindung sind schematisch in den beigefügten Zeichnungen dargestellt. Gleiche oder einander entsprechende Teile sind in den verschiedenen Ausführungsbeispielen mit übereinstimmenden Bezugszahlen bezeichnet.
- Figur 1: zeigt ein erstes Ausführungsbeispiel einer Anordnung aus einem Gehäuse für eine Vorrichtung zum Messen des Reifendruckes, einer Feder und einem Ventil in einer isometrischen Ansicht in Explosionsdarstellung,
- Figur 2: zeigt die Anordnung aus Figur 1 in einer isometrischen Ansicht aus anderer Blickrichtung,
- Figur 3: zeigt die Anordnung aus Figur 1 nach dem Zusammenbau in einer isometrischen Ansicht,
- Figur 4: zeigt eine Seitenansicht der Anordnung aus Figur 3,
- Figur 5: zeigt eine Ansicht auf die Unterseite der Anordnung aus Figur 3,
- Figur 6: zeigt eine andere Seitenansicht der Anordnung aus Figur 3,
- Figur 7: zeigt den Schnitt A-A gemäß Figur 5,
- Figur 8: zeigt ein zweites Ausführungsbeispiel einer Anordnung aus einem Gehäuse für eine Vorrichtung zur Messung des Reifendruckes, einer Feder und einem Ventil in einer isometrischen Explosionsdarstellung,
- Figur 9: zeigt die Anordnung aus Figur 8, halb zusammengebaut, in einer isometrischen Ansicht,
- Figur 10: zeigt die Anordnung aus Figur 8 vollständig zusammengebaut in einer isometrischen Ansicht,
- Figur 11: zeigt die Anordnung aus Figur 10 in der Draufsicht,
- Figur 12: zeigt die Anordnung aus Figur 10 in der Vorderansicht,
- Figur 13: zeigt die Anordnung aus Figur 10 in einer Seitenansicht,
- Figur 14: zeigt ein drittes Ausführungsbeispiel einer Anordnung aus einem Gehäuse für eine Vorrichtung zur Reifendruckmessung, einer Feder und einem Ventil in einer isometrischen Explosionsdarstellung,
- Figur 15: zeigt die Anordnung aus Figur 14, vollständig zusammengebaut, in einer isometrischen Darstellung, mit weiteren Teilen für die Montage und Vervollständigung des Ventils,
- Figur 16: zeigt die Anordnung aus Figur 15 in einer anderen isometrischen Ansicht,
- Figur 17: zeigt die Anordnung aus Figur 15 in der Draufsicht,
- Figur 18: zeigt die Anordnung aus Figur 15 in einer Seitenansicht,
- Figur 19: zeigt ein viertes Ausführungsbeispiel einer Anordnung aus einem Gehäuse für eine Vorrichtung zur Reifendruckmessung, einer Feder und einer Halterung dafür in einer Seitenansicht, wobei die Halterung mit einem Spannband an der Felge befestigt ist und
- Figur 20: zeigt den Schnitt A-A gemäß Figur 19.

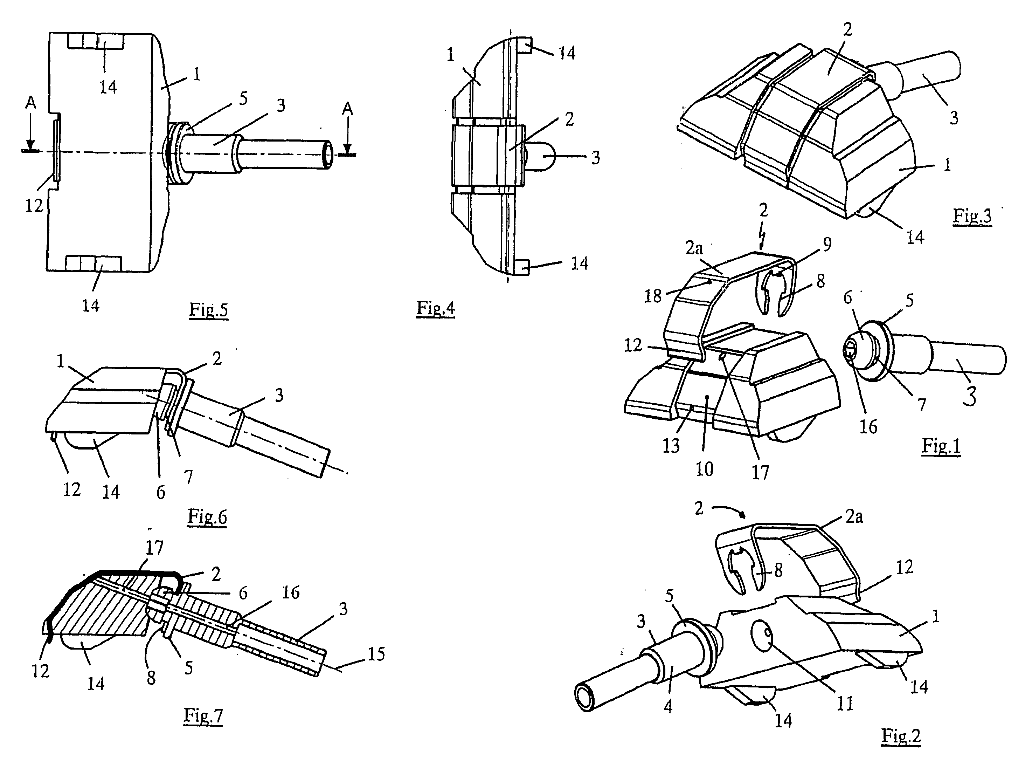

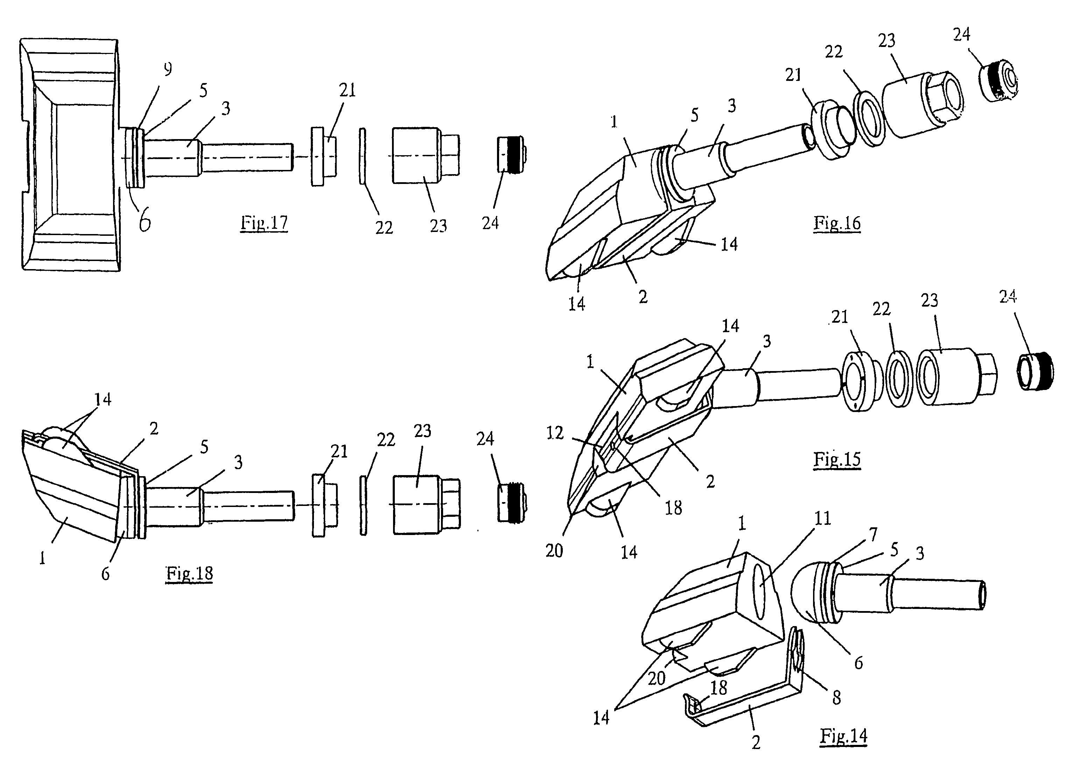

Die in den Figuren 1 bis 7 dargestellte Anordnung besteht aus einem Gehäuse 1, einer Feder 2 und einem Ventil 3, welches als Halterung für die Feder 2 dient. Das Ventil 3 hat einen Schaft 4, mit welchem es von innen her in ein Loch einer Felge gesteckt wird, welches sich bei einer Tiefbettfelge an einer das Tiefbett begrenzenden Flanke der Felge befindet. Das Ventil 3 wird bis zum Anschlag seines Bundes 5 in das Loch der Felge eingeführt und durch in den Figuren 15 bis 18 dargestellte Befestigungsmittel von außen her mit der Felge verschraubt. Der Bund 5 und ein mit einer Kugelkalotte als Oberfläche ausgebildeter Ventilfuß 6 kommen nach der Montage des Ventils 3 am Fahrzeugrad im Luftreifen zu liegen. Zwischen dem Bund 5 und der Kugelkalotte des Ventilfußes 6 ist eine Ringnut 7 ausgebildet, in welche die als Blattfeder ausgebildete Feder 2 mit einer an ihrem einen Ende ausgebildeten Gabel 8 eingreift. Dabei sorgt eine Zentriernase 9, welche an der Feder 2 zwischen den beiden Zinken der Gabel 8 ausgebildet ist, für eine vorbestimmte Lage der Gabel 8 in der Ringnut 7, indem die Nase 9 in eine in der Zeichnung nicht sichtbare Ausnehmung des Bodens der Nut 7 eingreift.

Die Feder 2 hat durch mehrfaches Abwinkeln eine ungefähr C-förmige Gestalt. Deshalb kann sie das Gehäuse 1 von der Oberseite her umgreifen. Das Gehäuse 1 hat zu diesem Zweck an der Oberseite und auf der dem Ventil 3 abgewandten Seite eine flache Nut 10. Die Gestalt der Nut 10 und die Gestalt der Feder 2 sind so aufeinander abgestimmt, daß die Feder 2 mit einem an die Gabel 8 anschließenden Bügel 2a formschlüssig und zugleich kraftschlüssig in die Nut 10 eingreifen kann.

Zur Aufnahme des balligen Ventilfußes 6 hat das Gehäuse 1 auf seiner dem Ventil 3 zugewandten Seite eine entsprechende Ausnehmung 11 in Gestalt einer zum Ventilfuß 6 passenden komplementären Kugelkalotte.

Zur Montage der Anordnung wird das Gehäuse 1 mit seiner Ausnehmung 11 an den Ventilfuß 6 gelegt, dann die Feder 2 mit ihrer Gabel 8 in die Ringnut 7 eingeführt und das gegenüberliegende Ende 12 der Feder von oben her in die flache Nut 10 gedrückt, bis das vordere Ende 12 unter Überwindung einer Rastkante 13, die in der flachen Nut 10 ausgebildet ist, hinter der Rastkante 13 einrastet, unter Bildung eines mäßigen Hinterschnittes. Die Abmessungen der Feder 2 sind so auf die Abmessungen des Gehäuses 1 abgestimmt, daß die Feder 2 nur unter elastischer Aufbiegung auf das Gehäuse aufrasten kann. Das hat zur Folge, daß das Ende 12 der Feder 2 das Gehäuse 1 gegen den Ventilfuß 6 drückt, so daß sich das Gehäuse 1 an diesem abstützt. Das Gehäuse 1, das Ventil 3 und die Feder 2 bilden nun eine zusammenhängende Einheit.

Zur Abstützung auf dem Felgenbett hat das Gehäuse 1 an seiner Unterseite noch zwei Füße 14, welche mit möglichst großem Abstand voneinander nahe bei zwei Seitenkanten des Gehäuses 1 liegen. Sie ermöglichen zusammen mit dem Ventilfuß 6 eine stabile Dreipunktlagerung des Gehäuses 1 im Luftreifen des Rades. Dabei erfolgt durch das Zusammenwirken der Kugelkalottenflächen des Ventilfußes 6 und der Ausnehmung 11 eine selbsttätige Zentrierung des Gehäuses 1 in seiner stabilst möglichen Lage.

Nachdem die Anordnung, wie in den Figuren 3 bis 7 gezeigt, vormontiert ist, kann sie an der Felge des Rades montiert werden, indem das Ventil 3 mit seinem Schaft 4 durch das dafür vorgesehene Loch in der Felge gesteckt und von außen festgeschraubt wird. Dabei ist durch entsprechende Formgebung der Feder 2 dafür gesorgt, daß diese das Gehäuse 1 ständig mit dessen Füßen 14 auf das Felgenbett drückt; dafür ist vor allem die Abwinkelung der Gabel 8 von der restlichen Feder 2 verantwortlich.

Das Ventil 3 hat einen in Richtung seiner Längsachse 15 durch dieses hindurchführenden Kanal 16, welcher an der Spitze des Ventilfußes 6 mündet. Damit die beim Aufpumpen des Luftreifens durch den Kanal 16 strömende Luft das Ventil durchströmen kann, ist in der Flucht der Achse 15 im Gehäuse 1 ein Durchgangskanal 17 vorgesehen, welcher von der Ausnehmung 11 ausgeht und das Gehäuse 1 durchquert. An der gegenüberliegenden Stelle, wo der Durchgangskanal 17 wieder zutage tritt, ist er durch die Feder 2 abgedeckt. Um trotzdem einen Luftaustritt zu ermöglichen, hat die Feder dort ein Loch 18. Alternativ könnte an dieser Stelle durch entsprechende Formgebung der Feder 2 ein Luftspalt zwischen der Feder 2 und der Nut 10 vorgesehen sein.

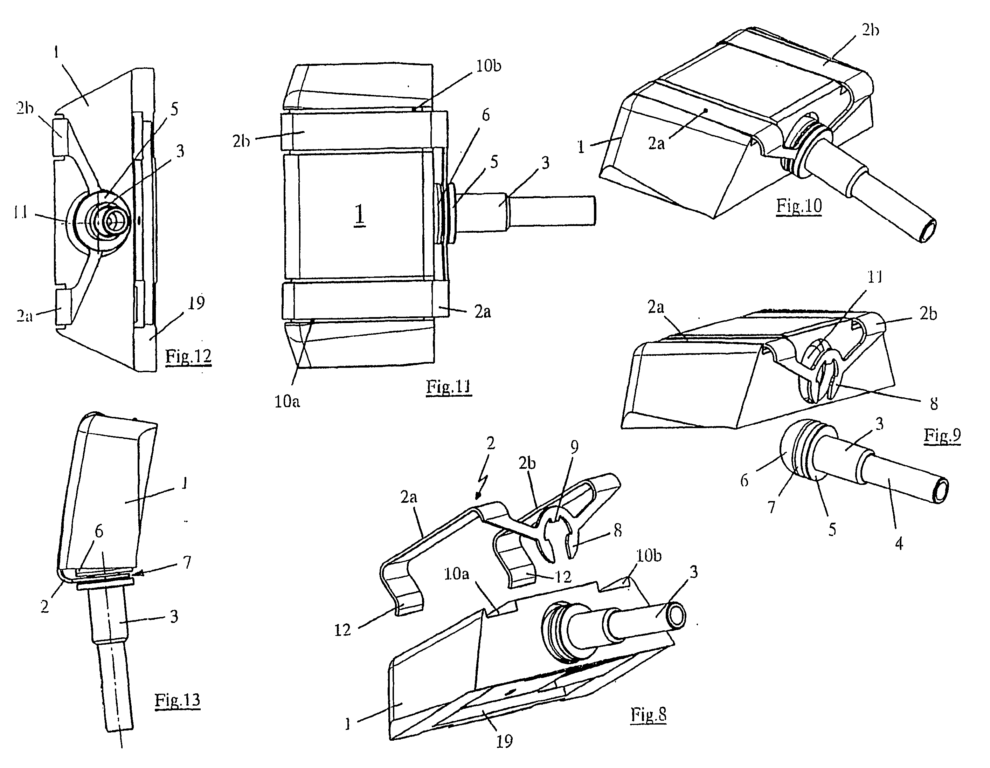

Das in den Figuren 8 bis 13 dargestellte zweite Ausführungsbeispiel unterscheidet sich von dem in den Figuren 1 bis 7 dargestellten ersten Ausführungsbeispiel darin, daß die Feder 2 zwei zueinander parallele Bügel 2a und 2b hat, welche über die Gabel 8 miteinander verbunden sind. In Anpassung daran hat das Gehäuse 1 auf seiner Oberseite zwei zueinander parallele Nuten 10a und 10b zur Aufnahme der beiden Bügel 2a und 2b der Feder. Anstelle von zwei Füßen 14 hat das Gehäuse an seiner Unterseite einen vorspringenden Rand 19.

Das in den Figuren 14 bis 18 dargestellte dritte Ausführungsbeispiel unterscheidet sich von dem in den Figuren 1 bis 7 dargestellten ersten Ausführungsbeispiel darin, daß die Feder 2 das Gehäuse 1 nicht übergreift, sondern untergreift. Demgemäß entfällt die flache Nut auf der Oberseite des Gehäuses 1. An der Unterseite des Gehäuses 1 ist ebenfalls keine Nut vorhanden. Dort verläuft die Feder 2 zwischen den beiden Füßen 14. Das vordere, abgeknickte Ende 12 der Feder 2 rastet in eine dafür vorgesehene Ausnehmung 20 ein, welche an der dem Ventil 3 abgewandten Seite des Gehäuses 1 vorgesehen ist und das vordere Ende 12 der Feder 2 mit wenig Spiel aufnimmt, so daß das Gehäuse 1 nicht seitlich verrutschen kann. Desweiteren hat das vordere Ende 12 der Feder 2 ein Loch 18, hinter welchem ein Durchgangskanal mündet, welcher sich von der Ausnehmung 11 bis zur Ausnehmung 20 durch das Gehäuse 1 erstreckt. Dargestellt sind noch ein Paßstück 21, ein Dichtring 22 und eine Buchse 23 mit Innengewinde zur Montage des Ventils 3 an einer Felge sowie eine Schraubkappe 24 zum Abschließen des äußeren Endes des Ventils 3.

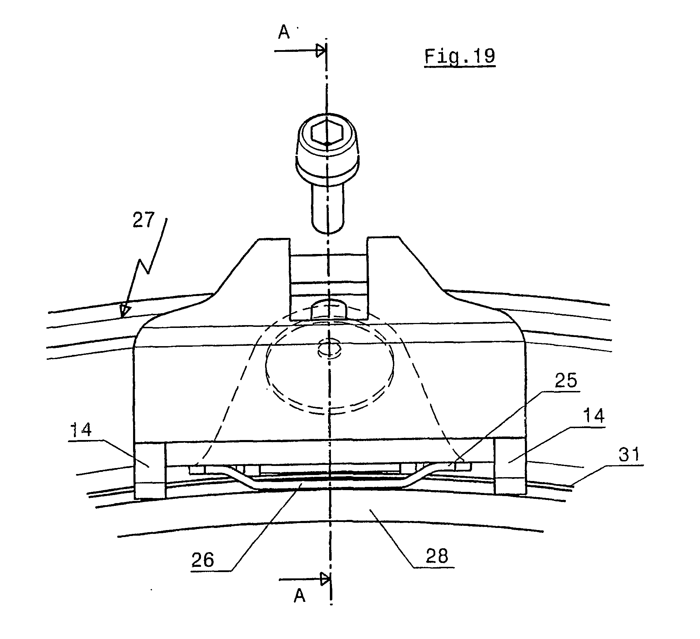

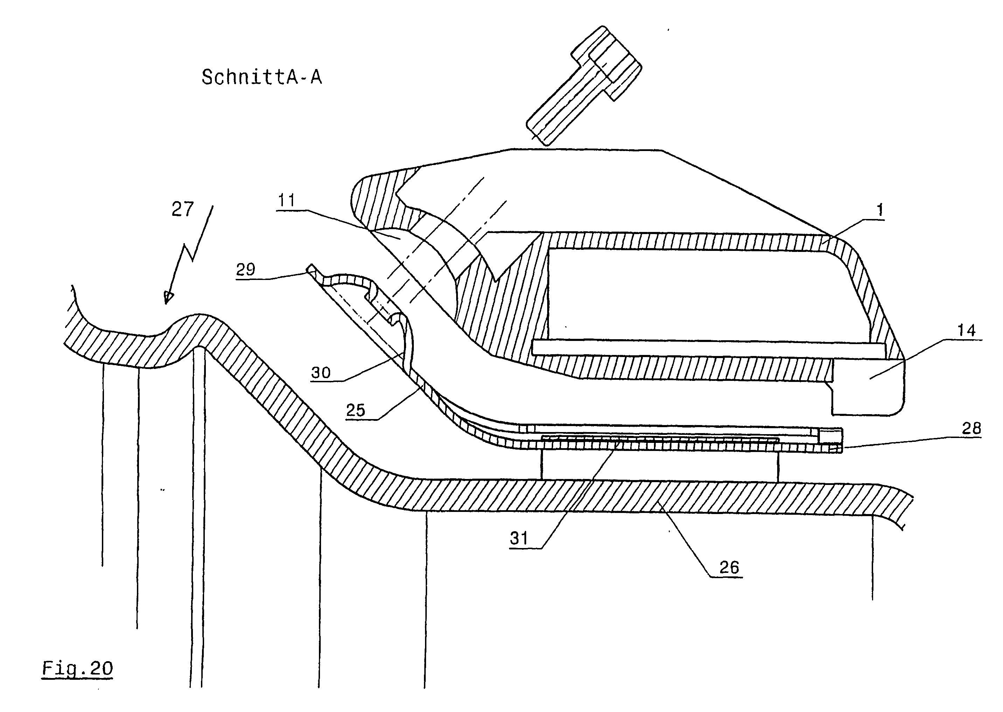

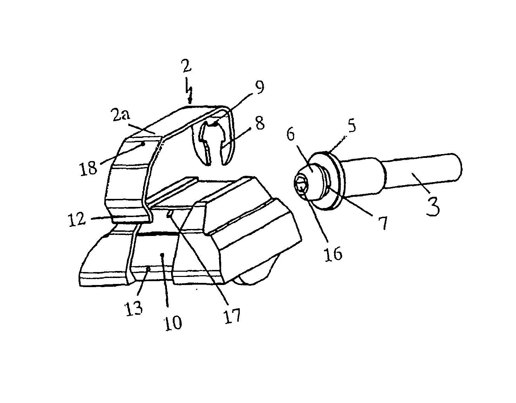

Während sich die in den Figuren 1 bis 18 dargestellten Ausführungsbeispiele besonders für Tiefbettfelgen eignen, eignet sich das in den Figuren 19 bis 21 dargestellte vierte Ausführungsbeispiel besonders für Flachbettfelgen. In diesem Fall dient als Halterung nicht ein Ventil, sondern ein gesondertes Blechteil 25, welches einen auf dem Bett 26 der Felge 27 liegenden Abschnitt 28 und einen von diesem abgewinkelten oder abgebogenen Teil 29 aufweist, welcher schräg vom Bett 26 absteht und einen ballig geformten Vorsprung 30 hat, welcher zum Eingriff in eine entsprechend ballig geformte Ausnehmung 11 des Gehäuses 1 bestimmt ist. Der ballige Vorsprung 30 und die ballige Ausnehmung 11 haben vorzugsweise eine Oberfläche in Gestalt einer Kugelkalotte. Der Vorsprung 30 ist in ähnlicher Weise gestaltet wie der Ventilfuß in den vorhergehenden Beispielen und erlaubt deshalb, eine Feder 2 daran zu halten, welche wie im ersten Ausführungsbeispiel ausgebildet ist, aber auch wie im zweiten oder im dritten Ausführungsbeispiel ausgebildet sein könnte.

Um die Halterung 25 an der Felge 27 befestigen zu können, ist der Teil 28 der Halterung 25 als Doppelschlaufe ausgebildet, durch welche ein Spannband 31 hindurchgezogen werden kann. Das Spannband 31 wird um das Bett 26 der Felge herumgelegt und straff gespannt, wodurch das Teil 28 fest gegen das Felgenbett 26 gezogen wird.

## Patentansprüche

1. Anordnung aus einer Vorrichtung zum Messen des Reifendruckes in einem Luftreifen, welche sich in einem Gehäuse (1) befindet, das nach der Montage des Luftreifens auf einem Rad im Luftreifen zu liegen kommt,
aus einer Feder (2), welche das Gehäuse (1) federnd beaufschlagt,
und aus einer am Rad zu befestigenden Halterung (3, 25) für die Feder (2),
**dadurch gekennzeichnet, daß** die Feder (2) und das Gehäuse (1) derart ausgebildet und aneinander angepaßt sind, daß sich das Gehäuse (1) an der Halterung (3, 25) abstützt und zu diesem Zweck zwischen der Feder (2) und der Halterung (3, 25) eingeklemmt ist.

2. Anordnung nach Anspruch 1, **dadurch gekennzeichnet, daß** die Feder (2) so ausgebildet und angeordnet ist, daß sie das Gehäuse (1) zusätzlich gegen das Felgenbett (26) drückt oder zieht.

3. Anordnung nach Anspruch 1 oder 2, **dadurch gekennzeichnet, daß** das Gehäuse (1) form- und kraftschlüssig zwischen der Halterung (3, 25) und der Feder (2) festgehalten ist.

4. Anordnung nach Anspruch 1, 2 oder 3, **dadurch gekennzeichnet, daß** das Gehäuse (1) eine Ausnehmung (11) zum Aufnehmen eines Teils (6, 30) der Halterung (3, 25) hat.

5. Anordnung nach einem der vorstehenden Ansprüche, **dadurch gekennzeichnet, daß** die Halterung (3, 25) ein ballig ausgebildetes Ende hat, insbesondere in Gestalt einer Kugelkalotte.

6. Anordnung nach Anspruch 4 oder 5, **dadurch gekennzeichnet, daß** das Gehäuse (1) eine zum balligen Ende der Halterung (3, 25) passende konkave Ausnehmung (11) hat.

7. Anordnung nach einem der vorstehenden Ansprüche, **dadurch gekennzeichnet, daß** die Feder (2) eine Blattfeder ist.

8. Anordnung nach einem der vorstehenden Ansprüche, **dadurch gekennzeichnet, daß** an der Halterung (3, 25) eine Ringnut (7) vorgesehen ist, in welche eine an der Feder (2) ausgebildete Gabel (8) einführbar ist.

9. Anordnung nach einem der Ansprüche 1 bis 7, **dadurch gekennzeichnet, daß** in das Ende der Halterung, an welchem sich das Gehäuse abstützt, eine Schraube gedreht ist und daß ein als Gabel oder mit einem Loch ausgebildetes Ende der Feder zwischen dem Kopf der Schraube und dem Ende der Halterung festgeklemmt ist.

10. Anordnung nach einem der vorstehenden Ansprüche, **dadurch gekennzeichnet, daß** die Feder (2) einen Bügel (2a) aufweist, welchen das Gehäuse (1) in einer mittig angeordneten Aufnahmeeinrichtung (10), insbesondere in einer flachen Nut, aufnimmt.

11. Anordnung nach Anspruch 10, **dadurch gekennzeichnet, daß** das Gehäuse (1) in Bezug auf die mittige Aufnahmeeinrichtung (10) spiegelsymmetrisch ist.

12. Anordnung nach einem der Ansprüche 1 bis 9, **dadurch gekennzeichnet, daß** die Feder (2) zwei zueinander parallele Bügel (2a, 2b) aufweist, welche ein gemeinsames Verbindungsteil (8) zum Anbringen an der Halterung (3, 25) haben, und daß das Gehäuse (1) zwei parallele Aufnahmeeinrichtungen (10a, 10b), insbesondere zwei flache Nuten, hat, welche die beiden Bügel (2a, 2b) aufnehmen.

13. Anordnung nach Anspruch 12, **dadurch gekennzeichnet, daß** die Aufnahmeeinrichtungen (10a, 10b) symmetrisch in Bezug auf die Mittelebene des Gehäuses (1) angeordnet sind, welche eine Längsachse (15) der Halterung (3) enthält.

14. Anordnung nach einem der vorstehenden Ansprüche, **dadurch gekennzeichnet, daß** das Gehäuse (1) auf seiner einen Seite (der Unterseite) zwei von der Unterseite vorspringende Füße (14) hat, welche auf unterschiedlichen Seiten der Mittelebene des Gehäuses (1) liegen, welche eine Längsachse (15) der Halterung (3) enthält.

15. Anordnung nach einem der vorstehenden Ansprüche, **dadurch gekennzeichnet, daß** die Halterung (3) durch ein Ventil mit einem Ventilfuß (6) gebildet ist, welcher nach der Montage des Ventils am Rad im Luftreifen zu liegen kommt.

16. Anordnung nach einem der vorstehenden Ansprüche, **dadurch gekennzeichnet, daß** das Gehäuse (1) einen Durchgangskanal (17) für Luft hat, in welchen das Ventil (3) mündet.

17. Anordnung nach einem der Ansprüche 1 bis 14, **dadurch gekennzeichnet, daß** die Halterung (25) mit einem Spannband (31), welches das Felgenbett (26) umschließt, an der Felge (27) befestigt ist.

18. Anordnung nach Anspruch 17, **dadurch gekennzeichnet, daß** die Halterung (25) einen auf dem Felgenbett (26) liegenden ersten Teil (28) und einen vom Felgenbett (26) abstehenden zweiten Teil (29) aufweist, gegen welchen das Gehäuse (1) eingespannt ist.

19. Anordnung nach Anspruch 17 oder 18, **dadurch gekennzeichnet, daß** an der Halterung (25) eine Schlaufe ausgebildet ist, durch welche das Spannband (31) hindurchgeführt ist.

20. Rad für Fahrzeuge mit Luftreifen
mit einer Felge (27),
mit einem in der Felge (27) ausgebildeten Bett (26), dessen Grund durch eine Flanke begrenzt ist, welche sich unter einem Winkel zur Drehachse der Felge (27) erstreckt,
mit einer Vorrichtung zum Messen des Reifendruckes in dem Luftreifen, welche sich in einem Gehäuse (1) befindet,
mit einer Feder (2),
und mit einer am Rad zu befestigenden Halterung (3, 25) für die Feder (2) welche das Gehäuse (1) in der Weise beaufschlagt, daß sich das Gehäuse (1) am Grund des Felgenbettes (26) abstützt,
**dadurch gekennzeichnet, daß** die Feder (2) und das Gehäuse (1) derart ausgebildet und aneinander angepaßt sind, daß sich das Gehäuse (1) an der Halterung (3, 25) abstützt und zu diesem Zweck zwischen der Feder (2) und der Halterung (3, 25) eingeklemmt ist.

21. Rad nach Anspruch 20 mit einer Anordnung nach einem der Ansprüche 1 bis 19.

22. Rad nach Anspruch 20 oder 21, **dadurch gekennzeichnet, daß** sich das Gehäuse (1) nur an der Halterung (3, 25) und am Grund des Felgenbettes (26) abstützt.

23. Rad nach Anspruch 22, **dadurch gekennzeichnet, daß** sich das Gehäuse (1) mit zwei Füßen (14) am Grund des Felgenbettes (26) abstützt.

## Claims

1. Arrangement comprising
a device for measuring the tire pressure in a pneumatic tire, the device being accommodated in a housing (1) which when the tire has been mounted comes to lie on a wheel inside the pneumatic tire,
a spring (2), which resiliently acts upon the housing (1),
and a holder (3, 25) for the spring (2), which holder is to be mounted on the wheel, **characterized in that** the spring (2) and the housing (1) are designed and adapted one to the other in such a way that the housing (1) is supported by the holder (3, 25) and is clamped for this purpose between the spring (2) and the holder (3, 25).

2. The arrangement as defined in Claim 1, **characterized in that** the spring (2) is so designed and arranged that it pushes or pulls the housing (19) additionally against the rim well (26).

3. The arrangement as defined in Claim 1 or Claim 2, **characterized in that** the housing (1) is retained between the holder (3, 25) and the spring (2) by friction and by a form fit.

4. The arrangement as defined in Claim 1, 2 or 3, **characterized in that** the housing (1) is provided with a recess (11) for receiving a part (6, 30) of the holder (3, 25).

5. The arrangement as defined in any of the preceding claims, **characterized in that** the holder (3, 25) has a convex end, especially in the form of a spherical cap.

6. The arrangement as defined in Claim 4 or Claim 5, **characterized in that** the housing (1) has a concave recess (11) matching the convex end of the holder (3, 25).

7. The arrangement as defined in any of the preceding claims, **characterized in that** the spring (2) is a leaf spring.

8. The arrangement as defined in any of the preceding claims, **characterized in that** the holder (3, 25) is provided with an annular groove (7) which can be engaged by a fork (8) formed on the spring (2).

9. The arrangement as defined in any of Claims 1 to 7, **characterized in that** a screw is screwed into the end of the holder by which the housing is supported, and one end of the spring, which is configured as a fork or provided with a hole, is clamped between the screw head and the end of the holder.

10. The arrangement as defined in any of the preceding claims, **characterized in that** the spring (2) is provided with a bracket (2a) adapted to receive the housing (1) in centrally arranged receiving means (10), especially in a shallow groove.

11. The arrangement as defined in Claim 10, **characterized in that** the housing (1) is mirror-symmetrical relative to the central receiving means (10).

12. The arrangement as defined in any of Claims 1 to 9, **characterized in that** the spring (2) has two mutually parallel brackets (2a, 2b) provided with a common connection element (8) by which it can be mounted on the holder (3, 25) and that the housing (1) is provided with two parallel receiving means (10a, 10b), especially two shallow grooves, for receiving the two brackets (2a, 2b).

13. The arrangement as defined in Claim 12, **characterized in that** the receiving means (10a, 10b) are provided in symmetric arrangement relative to that centre plane of the housing (1) which contains a longitudinal axis (15) of the holder (3).

14. The arrangement as defined in any of the preceding claims, **characterized in that** the housing (1) is provided on its one surface (its bottom) with two feet (14) that project from the bottom on different sides of that center plane of the housing (1) which comprises a longitudinal axis (15) of the holder (3).

15. The arrangement as defined in any of the preceding claims, **characterized in that** the holder (3) is formed by a valve with a valve base (6) which after assembly of the valve on the wheel comes to lie inside the pneumatic tire.

16. The arrangement as defined in any of the preceding claims, **characterized in that** the housing (1) is provided with a passage channel (17) for air, with the valve (3) opening into that channel.

17. The arrangement as defined in any of Claims 1 to 14, **characterized in that** the holder (25) is fixed on the rim (27) by means of a restraining strap (31) that embraces the rim well (26).

18. The arrangement as defined in Claim 17, **characterized in that** the holder (25) comprises a first section (28), lying on the rim well (26), and a second section (29), projecting from the rim well (26), the housing (1) being clamped against that second section.

19. The arrangement as defined in Claim 17 or Claim 18, **characterized in that** a loop is formed on the holder (25) through which extends the restraining strap (31).

20. Wheel for vehicles with pneumatic tires comprising
a rim (27);
a well (26) formed in the rim (27), whose base is bordered by a sidewall which extends at an angle relative to the axis of rotation of the rim (27);
a device for measuring the tire pressure in the pneumatic tire, which is accommodated in a housing (1);
a spring (2);
and a holder (3, 25), to be fixed on the wheel, for the spring (2) which acts upon the housing (1) in such a way that the housing (1) is supported on the base of the rim well (26);
**characterized in that** the spring (2) and the housing (1) are designed and adapted one to the other in such a way that the housing (1) is supported by the holder (3, 25) and is clamped for this purpose between the spring (2) and the holder (3, 25).

21. The wheel as defined in Claim 20 comprising an arrangement according to any of Claims 1 to 19.

22. The wheel as defined in Claim 20 or Claim 21, **characterized in that** the housing (1) is supported only by the holder (3, 25) and on the base of the rim well (26).

23. The wheel as defined in Claim 22, **characterized in that** the housing (1) is supported on the base of the rim well (26) by two feet (14).

## Revendications

1. Agencement constitué par un dispositif pour la mesure de la pression de gonflage dans un bandage pneumatique, qui est disposé dans un boîtier (1) qui vient se placer dans le bandage pneumatique après le montage du bandage pneumatique sur une roue, par un ressort (2) qui agit élastiquement sur le boîtier (1), et par un dispositif de fixation (3, 25) pour le ressort (2), qui doit venir se fixer contre la roue, **caractérisé en ce que** le ressort (2) et le boîtier (1) sont réalisés et sont adaptés l'un à l'autre de telle sorte que le boîtier (1) vient s'appuyer contre le dispositif de fixation (3, 25) et est encastré à cet effet entre le ressort (2) et le dispositif de fixation (3, 25).

2. Agencement selon la revendication 1, **caractérisé en ce que** le ressort (2) est réalisé et disposé de telle sorte qu'il exerce en outre sur le boîtier (1) une pression ou une traction par rapport au creux de la jante (26).

3. Agencement selon la revendication 1 ou 2, **caractérisé en ce que** le boîtier (1) est maintenu par voie mécanique et par friction/adhérence entre le dispositif de fixation (3, 25) et le ressort (2).

4. Agencement selon la revendication 1, 2 ou 3, **caractérisé en ce que** le boîtier (1) possède un évidement (11) pour la réception d'une partie (6, 30) du dispositif de fixation (3, 25).

5. Agencement selon l'une quelconque des revendications précédentes, **caractérisé en ce que** le dispositif de fixation (3, 25) possède une extrémité de forme bombée, en particulier en forme de calotte sphérique.

6. Agencement selon la revendication 4 ou 5, **caractérisé en ce que** le boîtier (1) possède un évidement de forme concave épousant la forme bombée de l'extrémité du dispositif de fixation (3, 25).

7. Agencement selon l'une quelconque des revendications précédentes, **caractérisé en ce que** le ressort (2) est un ressort à lames.

8. Agencement selon l'une quelconque des revendications précédentes, **caractérisé en ce qu'**on prévoit, sur le dispositif fixation (3, 25), une rainure annulaire (7) dans laquelle on peut guider une fourche (8) réalisée sur le ressort (2).

9. Agencement selon l'une quelconque des revendications 1 à 7, **caractérisé en ce qu'**on introduit une vis dans l'extrémité du dispositif de fixation contre lequel s'appuie le boîtier, et **en ce qu'**on encastre une extrémité du ressort, réalisée sous la forme d'une fourche ou munie d'un trou, entre la tête de la vis et l'extrémité du dispositif de fixation.

10. Agencement selon l'une quelconque des revendications précédentes, **caractérisé en ce que** le ressort (2) présente un étrier (2a) qui vient se loger dans le boîtier (1), dans un dispositif de réception (10) disposé au centre, en particulier dans une rainure plate.

11. Agencement selon la revendication 10, **caractérisé en ce que** le boîtier (1) est disposé en symétrie spéculaire par rapport au dispositif de réception central (10).

12. Agencement selon l'une quelconque des revendications 1 à 9, **caractérisé en ce que** le ressort (2) présente deux étriers réciproquement parallèles (2a, 2b) qui possèdent un élément de liaison commun (8) pour leur application contre le dispositif de fixation (3, 25), et **en ce que** le boîtier (1) possède deux dispositifs de réception parallèles (10a, 10b), en particulier deux rainures plates, dans lesquels viennent se loger les deux étriers (2a, 2b).

13. Agencement selon la revendication 12, **caractérisé en ce que** les dispositifs de réception (10a, 10b) sont disposés en position symétrique par rapport au plan médian du boîtier (1), par lequel passe l'axe longitudinal (15) du dispositif de fixation (3).

14. Agencement selon l'une quelconque des revendications précédentes, **caractérisé en ce que** le boîtier (1) possède, sur son premier côté (le côté inférieur), deux pieds (14) faisant saillie par rapport au côté inférieur, qui viennent se disposer sur différents côtés du plan médian du boîtier (1) par lequel passe l'axe longitudinal (15) du dispositif de fixation (3).

15. Agencement selon l'une quelconque des revendications précédentes, **caractérisé en ce que** le dispositif de fixation (3) est formé à l'aide d'une valve possédant une embase de valve (6) qui vient se disposer dans le bandage pneumatique après le montage de la valve contre la roue.

16. Agencement selon l'une quelconque des revendications précédentes, **caractérisé en ce que** le boîtier (1) possède un canal de passage (17) pour l'air dans lequel débouche la valve (3).

17. Agencement selon l'une quelconque des revendications 1 à 14, **caractérisé en ce que** le dispositif de fixation (25) est fixé à la jante (27) avec un collier de serrage (31) qui entoure le creux de la jante (26).

18. Agencement selon la revendication 17, **caractérisé en ce que** le dispositif de fixation (25) présente une première partie (28) disposée dans le creux de la jante (26) et une deuxième partie (29) faisant saillie par rapport au creux de la jante (26), contre laquelle est serré le boîtier (1).

19. Agencement selon la revendication 17 ou 18, **caractérisé en ce qu'**une boucle est réalisée contre le dispositif de fixation (25), à travers laquelle est guidé le collier de serrage (31).

20. Roue pour des véhicules automobiles du type à bandages pneumatiques, comprenant
une jante (27),
un creux (26) réalisé dans la jante (27) dont la base est définie par un flanc qui s'étend en formant un angle par rapport à l'axe de rotation de la jante (27) ;
un dispositif pour la mesure de la pression de gonflage régnant dans le bandage pneumatique, qui est disposé dans un boîtier (1) ;
un ressort (2) ; et
un dispositif de fixation (3, 25) pour le ressort (2), qui doit venir se fixer sur la roue, le ressort agissant sur le boîtier (1) de telle sorte que le boîtier (1) vient s'appuyer contre la base du creux de la jante (26) ;
**caractérisé en ce que** le ressort (2) et le boîtier (1) sont réalisés et sont adaptés l'un à l'autre de telle sorte que le boîtier (1) vient s'appuyer contre le dispositif de fixation (3, 25) et est encastré à cet effet entre le ressort (2) et le dispositif de fixation (3, 25).

21. Roue selon la revendication 20, comprenant un agencement selon l'une quelconque des revendications 1 à 19.

22. Roue selon la revendication 20 ou 21, **caractérisée en ce que** le boîtier vient s'appuyer seulement contre le dispositif de fixation (3, 25) et contre la base du creux de la jante (26).

23. Roue selon la revendication 22, **caractérisée en ce que** le boîtier (1) vient s'appuyer avec deux pieds (14) contre la base du creux de la jante (26).
